Europäisches Patentamt

European Patent Office

Office européen des brevets

(19)

(11) Veröffentlichungsnummer: **0 026 420**
**B1**

(12) # EUROPÄISCHE PATENTSCHRIFT

(45) Veröffentlichungstag der Patentschrift:
28.03.84

(51) Int. Cl.³: **G 01 N 1/28**

(21) Anmeldenummer: **80105671.4**

(22) Anmeldetag: **20.09.80**

(54) Verfahren und Einbettungssystem zur Einbettung von Gewebsproben.

(30) Priorität: **29.09.79 DE 2939582**

(43) Veröffentlichungstag der Anmeldung:
**08.04.81 Patentblatt 81/14**

(45) Bekanntmachung des Hinweises auf die Patenterteilung:
**28.03.84 Patentblatt 84/13**

(84) Benannte Vertragsstaaten:
**BE CH DE FR GB LI NL**

(56) Entgegenhaltungen:
**DE - A - 2 640 966**
**DE - A - 2 748 938**
**DE - A - 2 847 974**

**MIKROSKOPIE, Band 13, 1958 Wien, München J.W.**
**BOELLAARD et al. "Die Herstellung histologischer**
**Schnitte von nicht entkalkten Knochen mittels**
**Einbettung in Methacrylsäure-ester" Seiten 386 bis 391**
**BEITR. PATH., Band 147, 1972 Stuttgart H.**
**NEMETSCHEK-GANSLER et al. "Erfahrungen mit einer**
**neuen Fixierungs- und Einbettungsmethode für die**
**Routine-Histologie" Seiten 201 bis 206**

(73) Patentinhaber: **HOECHST AKTIENGESELLSCHAFT,**
**Postfach 80 03 20, D-6230 Frankfurt am Main 80 (DE)**

(72) Erfinder: **Mück, Karl-Friedrich, Dr., Wittenberger**
**Strasse 17, D-6200 Wiesbaden (DE)**
Erfinder: **Post, Lothar, Berliner Ring 2, D-6233 Kelkheim**
**(Taunus) (DE)**
Erfinder: **Westen, Hannes, Dr., Gustav-Mahler-Strasse 6,**
**D-6200 Wiesbaden (DE)**

Verfahren und Einbettungssystem zur Einbettung von Gewebsproben

Die vorliegende Erfindung betrifft ein Verfahren und ein Einbettungssystem zur Einbettung von Gewebsproben in Gemischen aus Hydroxyalkyl(meth)acrylat und Alkyl(meth)acrylat bei niedrigen Temperaturen für die Enzymhistochemie.

Es ist bekannt, dass sich monomeres Methylmethacrylat (MMA) zur Einbettung von Gewebsproben für die mikroskopische Zelluntersuchung verwenden lässt; vgl. Mikroskopie 13, S. 386 (1959). Für die feingewebliche Untersuchung von Knochenmarksbiopsien von Mensch und Tier bedeutet diese Einbettung in MMA derzeit die Methode der Wahl, da sich hierdurch die sonst notwendige vorhergehende Entkalkung der knöchernen Gewebsbestandteile erübrigt.

Ein wesentlicher Nachteil der derzeit bekannten MMA-Einbettungsverfahren ist jedoch, dass sich nur eine sehr beschränkte Anzahl literaturbekannter, enzymhistochemischer Nachweise an derart präparierten Gewebeproben durchführen lässt. Hierzu gehören bisher der Aktivitätsnachweis von $\alpha$-Naphthol-AS-D-chloracetatesterase und saurer Phosphatase. Ein Grund für die Schwierigkeit, empfindliche Zellenzyme in MMA-eingebetteten Gewebsproben nachzuweisen, liegt u.a. in der Tatsache begründet, dass das bisher geübte Einbettungsverfahren unter Bedingungen abläuft, bei denen die meisten Enzyme ihre Aktivität verlieren. Dies gilt auch beispielsweise für die in den Deutschen Offenlegungsschriften 2 640 966 und 2 748 938 offenbarten Verfahrensweisen.

Auf Basis von 2-Hydroxyäthylmethacrylat, einem wasserlöslichen Methacrylat, ist ein Verfahren zur Gewebseinbettung für die Enzymhistochemie bekannt geworden (vergl. Beitr. path. Anat. 147, S. 201 (1972)). Diesem Einbettungsverfahren haften jedoch vor allem die beiden nachfolgenden Nachteile an:

Zum einen lassen sich die danach erhaltenen Probekörper — da das Einbettungsmaterial hygroskopisch ist — nur schwierig handhaben und insbesondere schlecht schneiden. Zum anderen sind Einbettungsmischungen auf Basis dieser wasserlöslichen Methacrylate beispielsweise für die Knochenmarkshistologie nicht geeignet, da damit bei grösseren knochenhaltigen Gewebsproben keine gleichmässige Polymerisation über den gesamten Querschnitt der Probe zu erreichen ist.

In der DE-A-2 847 974 ist bereits ein Verfahren zur Einbettung von Gewebsproben vorgeschlagen worden, wobei das einzubettende Gewebe in Methylmethacrylat, ggf. in Abmischung mit anderen (Meth)acrylaten und/oder einem Weichmacher, bei Temperaturen von höchstens +15°C in Gegenwart eines Tieftemperatur-Initiatorsystems, das neben dem Radikalbildner Beschleuniger enthält, einpolymerisiert wird. Weiterhin betrifft diese Patentanmeldung auch entsprechend zusammengesetzte Einbettungssysteme. Nachteilig ist hier unter anderem, dass das Aufziehen auf Glasobjektträger zumeist relativ schwierig ist.

Es wurde nun gefunden, dass bei Verwendung von Gemischen von Alkyl(meth)acrylaten und Hydroxyalkyl(meth)acrylaten vorteilhafte Ergebnisse erzielbar und die Nachteile des obigen Standes der Technik ganz oder zumindestens weitgehend vermeidbar sind.

Die Erfindung betrifft daher ein Verfahren zur Einbettung von Gewebsproben, insbesondere Gewebe mit knöchernen Anteilen, wobei das einzubettende Gewebe in Alkyl(meth)acrylat, ggf. in Abmischung mit einem Weichmacher, bei Temperaturen von höchstens +20°C, vorzugsweise bei +2°C bis —20°C in Gegenwart eines an sich bekannten Tieftemperatur-Initiatorsystems, das neben dem Radikalbildner Beschleuniger enthält, einpolymerisiert wird, dadurch gekennzeichnet, dass das Alkyl(meth)acrylat in Abmischung mit Hydroxyalkyl(meth)acrylat eingesetzt wird, wobei das Gewichtsverhältnis von Hydroxyalkyl(meth)acrylat zu Alkyl(meth)acrylat den Wert von 9:1 nicht überschreitet.

Weiterhin betrifft die Erfindung entsprechende Einbettungssysteme gemäss den Ansprüchen 8 bis 13.

Als Einbettungsmedium dient also erfindungsgemäss ein Gemisch aus Hydroxyalkyl(meth)acrylat und/oder Hydroxyalkylacrylat als der einen Monomerkomponente und Alkylmethacrylat und/oder Alkylacrylat als der anderen Monomerkomponente. Das Mischungsverhältnis liegt dabei zwischen 8:2 und 4:6 Gewichtsteilen und vorzugsweise zwischen 3:1 und 1,5:1.

Das jeweilige Acrylat bzw. das entsprechende Acrylatpolymere wirkt dabei als Weichmacher gegenüber der restlichen Polymerphase. Vorzugsweise enthält das erfindungsgemässe Monomerengemisch daher mindestens ein Acrylmonomeres, d.h. entweder Alkylacrylat oder Hydroxyalkylacrylat. Anderenfalls, d.h. falls nur Methacrylate als Monomere zum Einsatz kommen, müssen im allgemeinen geeignete Zusatzstoffe (Weichmacher) hinzugegeben werden, um eine ausreichende Schneidfähigkeit der Einbettung zu erhalten.

Der Hydroxyalkylrest im Hydroxyalkyl(meth)acrylat, vorzugsweise 2-Hydroxyalkyl(meth)acrylat, enthält zweckmässigerweise 2 bis 6 C-Atome, vorzugsweise 2 bis 4 C-Atome, wobei als Beispiel 2-Hydroxyäthyl, 2-Hydroxypropyl, 2-Hydroxy(n- und i-)butyl und 2-Hydroxy(n)hexyl genannt seien. Bevorzugt kommen erfindungsgemäss 2-Hydroxypropyl(meth)acrylat sowie 2-Hydroxybutyl(meth)acrylat und speziell 2-Hydroxyäthylmethacrylat bzw. 2-Hydroxyäthylacrylat in Betracht. Es sind sowohl Gemische der verschiedenen Hydroxyalkylmethacrylate und Hydroxyalkylacrylate untereinander wie auch miteinander möglich.

Als Alkyl(meth)acrylate sind vor allem solche mit 1 bis 10 C-Atomen, vorzugsweise 1 bis 6 C-Atomen in der Alkoholkomponente geeignet. Es kommen auch hier sowohl Mischungen der verschiedenen Alkylmethacrylate und Alkylacrylate untereinander als auch miteinander in Frage. Als Beispiele für Alkylmethacrylate seien Methylmethacrylat, Äthylmethacrylat, Propylmethacrylat und Butylmethacrylat genannt, wobei das Methylmethacrylat bevorzugt ist; bezüglich der Acrylate seien hier vor allem Äthyl-, Propyl-, Butyl- und n-Hexylacrylat aufgeführt. Im Fall von Mischungen aus Methacrylaten und Acrylaten übt das entsprechende Acrylatpolymere wiederum eine Weichmacherwirkung auf die Polymerphase aus.

Die vorstehenden Monomeren enthalten üblicherweise die bekannten Stabilisatoren (Polymerisationsinhibitoren), wie p-Hydrochinon, die im Bedarfsfalle nach bekannten Methoden, wie beispielsweise durch Destillation oder durch Säulenchromatographie vor Polymerisationsbeginn entfernt werden können. Im allgemeinen ist dies jedoch nicht erforderlich, vielmehr wird der Stabilisator hier durch eine entsprechend grössere Menge an Radikalinitiator kompensiert.

Vorzugsweise enthält das erfindungsgemässe Einbettungsgemisch Stoffe mit weichmachender Wirkung (Weichmacher). Als solche kommen zum einen die Hydroxyalkylacrylate und/oder Alkylacrylate bzw. die entsprechenden Polymeren in Frage, wie sie bereits weiter oben aufgeführt worden sind. Zum anderen sind hierfür auch Verbindungen der Art geeignet, wie sie beispielsweise in der Zeitschrift «Blut», Bd. XIII, Heft 6 (Sept. 1966), S. 337 ff, insbesondere S. 345 und 355 beschrieben sind. Vorzugsweise seien hier Nonylphenolpolyglykolätheracetat und Butylglykol genannt. Es sind auch Gemische dieser Verbindungen mit den erwähnten Hydroxyalkylacrylaten bzw. Alkylacrylaten möglich. Die Menge an Weichmacher liegt — in Abhängigkeit von der Art des Weichmachers — zumeist zwischen 3 und 30 Gew.-%, bezogen auf die Monomerenmischung.

Die Tieftemperatur-Initiatorsysteme im Sinne der Erfindung bestehen aus (a) den üblichen Radikalbildnern (Radikalinitiatoren) für die Polymerisation von Acrylaten und (b) einem Beschleuniger (Co-Initiator).

Als Radikalinitiatoren kommen die hierfür bekannten Verbindungen in Frage, beispielsweise Peroxyverbindungen wie organische Peroxide und Hydroperoxide oder Perkarbonate. Genannt seien hierzu zum Beispiel Dibenzoylperoxid, Dilaurylperoxid, tert.-Butylperpivalat und Diisopropylperkarbonat. Es können auch Gemische derartiger Radikalinitiatoren verwendet werden. Wegen der in der Regel günstigen Löslichkeit derartiger Radikalinitiatoren in Alkyl-(meth)acrylaten, insbesondere Methylmethacrylat kann es von Vorteil sein, zunächst eine entsprechende Lösung herzustellen und diese Lösung dann den übrigen Komponenten zuzugeben.

Als Beschleuniger werden erfindungsgemäss die hierfür bekannten Verbindungen eingesetzt, wie beispielsweise gerad- oder verzweigtkettige, sekundäre oder tertiäre aliphatische Amine, vorzugsweise mit 1-5 C-Atomen, aliphatisch-cycloaliphatische sekundäre oder tertiäre Amine, aromatisch-aliphatische sekundäre oder tertiäre Amine.

Von den Aminen sind tertiäre Amine bevorzugt. Beispielhaft seien hierzu genannt: Triäthylamin, N,N-Dimethylanilin, N,N-Diäthylanilin und N,N-Dimethyl-p-Toluidin. Es liegt selbstverständlich im Rahmen der Erfindung, auch Gemische dieser Beschleuniger einzusetzen.

Weitere Beispiele für erfindungsgemäss einsetzbare Tieftemperatur-Initiatorsysteme sind beispielsweise beschrieben in Houben-Weyl, «Methoden der organischen Chemie», Bd. 14/1 (1961), S. 263 ff und S. 291 ff (Thieme-Verlag, Stuttgart).

Vorzugsweise kommt nach der Erfindung als Tieftemperatur-Initiatorsystem die Kombination von Dibenzoylperoxid mit einem der vorstehenden tertiären Amine und einem der weiter unten aufgeführten Polymerisationsregulatoren in Betracht.

Die Menge an dem erfindungsgemässen Initiatorsystem bzw. der Einzelkomponenten hängt von der Art des jeweiligen Initiatorsystems bzw. der Einzelkomponenten, der gewünschten Polymerisationszeit, der Polymerisations(Einbettungs)-temperatur und der Menge an Hydroxyalkyl(meth)acrylat ab, kann aber durch einfache Routineversuche leicht ermittelt werden. So ist — bei gleichem Initiatorsystem — naturgemäss umso mehr davon einzusetzen, je tiefer die Temperatur liegt, um noch eine vertretbare Einbettungszeit zu erhalten. Andererseits wird bei höheren Temperaturen entsprechend weniger an Initiatorsystem zu benutzen sein, um nicht in Gefahr zu laufen, dass aufgrund einer zu schnellen Polymerisation die Temperatur der Probe zu sehr über die Umgebungstemperatur ansteigt und damit eine Schädigung der Enzymaktivität eintritt. Weiterhin kann die Menge an Initiatorsystem umso niedriger liegen, je höher der Gehalt an Hydroxyalkyl-(meth)acrylat ist.

Im allgemeinen beträgt erfindungsgemäss die Menge an Radikalinitiator 5% bis 0,5%, vorzugsweise 3,5% bis 1% und die des Beschleunigers 10% bis 0,1%, vorzugsweise 0,5% bis 0,1%, jeweils bezogen auf das Monomerengemisch.

An und für sich sind die vorstehend angegebenen Bereiche nicht kritisch und können innerhalb bestimmter Grenzen unter- bzw. überschritten werden, wenngleich dann in der Regel gewisse Nachteile in Kauf genommen werden müssen.

So hat — wie erwähnt — die Temperatur einen massgeblichen Einfluss auf die Grenzbereiche des erfindungsgemässen Initiatorsystems; falls also gleichzeitig tiefe Temperaturen und kleine Initiatormengen benutzt werden, wird bei Unterschreiten einer bestimmten, leicht zu bestimmenden Menge an Gesamtinitiator bzw. Teilinitiator nur noch eine verzögerte oder unvollständige Polymerisation stattfinden.

Andererseits können zu hohe Mengen an Gesamtinitiator und insbesondere an Co-Initiator zu Diffusionsstörungen im Zentrum der Gewebeproben, u.U. begleitet von Vernetzungserscheinungen im Polymerisat, führen. Dies kann sich störend auf die weitere Verarbeitung der Proben auswirken, z.B. beim Schneiden der Kunststoffblöcke oder beim später evtl. notwendigen Herauslösen des Kunststoffes aus den Gewebeschnitten für die Färbung. In dieser Hinsicht sollte beispielsweise bei Verwendung von DMA und einer Temperatur von beispielsweise +2°C, die Menge an DMA 0,9%, bezogen auf die Monomerenmischung, möglichst nicht überschreiten.

Weiterhin ist bei hohen Initiatormengen, wie bereits ausgeführt, die Gefahr einer Temperaturschädigung der Probe grösser.

Zusätzlich zu den weiter oben genannten Beschleunigern können im Bedarfsfalle, insbesondere bei Einbettungstemperaturen unterhalb von 0°C, auch noch Schwermetallsalze als Beschleuniger eingesetzt werden. Vorzugsweise sind dies solche, die im Monomeren löslich sind und deren Schwermetallion einem Valenzwechsel zugänglich ist, wie beispielsweise Kobalt-, Kupfer-, Vanadium- oder Eisensalze. Unter Umständen ist es auch möglich, das Schwermetallsalz anstelle der genannten Beschleuniger einzusetzen.

Besonders vorteilhaft hat es sich erwiesen, zusätzlich zu dem Beschleuniger sog. Polymerisationsregulatoren zu verwenden, da auf diese Weise ein gleichmässigerer Polymerisationsverlauf unter Vermeidung von Temperaturspitzen erreicht wird. Ausserdem kann dadurch die Menge an Initiatorsystem entsprechend gesenkt werden.

Als derartige Polymerisationsregulatoren kommen beispielsweise organische Phosphorverbindungen und vor allem organische Schwefelverbindungen in Betracht. Zu den ersteren gehören insbesondere aliphatische oder aromatische sekundäre oder tertiäre Phosphine wie etwa Triphenylphosphin. Unter den organischen Schwefelverbindungen sind insbesondere Merkaptane oder Thiophenole, vorzugsweise solche mit geringer Flüchtigkeit, oder Sulfone wie etwa in der DE-C-916 733 beschrieben, zu nennen. Beispielsweise seien hierzu aufgeführt: Duodecylmerkaptan, Thiophenol, Thiokresol und [β-Oxyäthyl-]-p-Tolylsulfon.

Weiterhin kommen als Polymerisationsregulatoren auch Lösungsmittel in Frage, insbesondere vor allem aliphatische einwertige Alkohole mit 1 bis 6 C-Atomen wie Methanol, Äthanol, n- und i-Propanol, n- und i-Butanol. Auch aliphatische Ketone, insbesondere solche mit 3 bis 6 C-Atomen wie Aceton und Methyläthylketon sind hierfür geeignet. Es können auch Gemische der verschiedenen Lösungsmittel zum Einsatz kommen.

Die Schwermetallsalze und Polymerisationsregulatoren kommen zweckmässigerweise in Mengen von 0,05 bis 2%, vorzugsweise 0,01 bis 1%, bezogen auf das Monomerengemisch, zum Einsatz. Falls es sich bei den Polymerisationsregulatoren um Lösungsmittel handelt, so beträgt deren Menge in der Regel 5 bis 20%, vorzugsweise 10-15%, gleichfalls bezogen auf das Monomerengemisch.

Die Temperaturen, bei denen erfindungsgemäss die Einbettung erfolgt, liegen so tief, dass die Enzymaktivität der jeweiligen Gewebsprobe vollständig oder zumindestens weitgehend erhalten bleibt, in der Regel also bei —40°C bis maximal +20°C, vorzugsweise bei +2°C bis —20°C.

Während sich die Temperaturobergrenze durch die zunehmende Schädigung der Enzymaktivität ergibt, wird die Temperaturuntergrenze durch die bei tiefer Temperatur abfallende Aktivität des erfindungsgemässen Initiatorsystems und dem daraus resultierenden Anstieg der Polymerisationszeit bestimmt. In den meisten Fällen dürften daher Temperaturen unterhalb von etwa —50°C praktisch kaum zum Einsatz kommen.

Die besagten Temperaturen verstehen sich als die Temperatur des jeweiligen Kühlmediums, z.B. des Eisbades oder des Kühlschrankes. Es ist dabei durch geeignete Polymerisationsführung dafür Sorge zu tragen, dass die Temperatur des Polymerisationsgemisches und der einzubettenden Probe nicht wesentlich über diese Umgebungstemperatur ansteigt.

Bei einem entsprechend aktiven Initiatorsystem sind also beispielsweise entsprechend geringere Mengen davon einzusetzen und umgekehrt bzw. die Umgebungstemperatur ist ausreichend tief zu wählen bzw. die Menge an Polymerisationsregulator ist entsprechend zu dosieren. Gegebenenfalls kann auch durch eine entsprechend intensive Kühlung einem Temperaturanstieg im Einbettungsgemisch entgegengewirkt werden.

Die Temperaturkontrolle im Einbettungsgemisch kann — falls erforderlich — über übliche Temperaturfühler erfolgen.

Vorzugsweise geschieht dies über eine feine Messelektrode eines Eisen-Konstantan-Thermoelements (beispielsweise der Firma Degussa), die in ein methanolgefülltes Test-Tube (beispielsweise Nr. 39/10 A der Firma Sarstedt) eingetaucht wird. Die in Grad Celsius geeichte Messspannung des Thermoelements kann vorzugsweise mit einem Linienschreiber (beispielsweise PM 8010 der Firma Philips) aufgezeichnet werden.

Zur Durchführung des erfindungsgemässen Einbettungsverfahrens wird die jeweilige Gewebeprobe zunächst in der üblichen Weise vorbehandelt, d.h. beispielsweise fixiert und entwässert, wie etwa beschrieben in der vorstehend zitierten Literaturstelle oder in «Blut», Bd. 32 (1976) S. 215-218, sowie in «Beitr. path. Anat.», Bd. 147 (1972) S. 201-206.

Danach wird die so vorbehandelte Probe in das erfindungsgemässe, evtl. schon eine der beiden Initiatorkomponenten enthaltende Einbettungsgemisch eingebracht, worauf dann nach Zugabe des Tieftemperaturinitiators bzw. der jeweiligen anderen Initiatorkomponente und gegebenenfalls des zusätzlichen Beschleunigers und/oder Polymerisationsregulators die Einpolymerisation erfolgt. Es ist dabei nicht erforderlich, unter Sauerstoffausschluss zu arbeiten, wenngleich dies erfindungsgemäss bevorzugt wird. Bei Sauerstoffanwesenheit ist darauf zu achten, dass beim Mischen der verschiedenen Einbettungsbestandteile nicht zu viel an Sauerstoff in das Einbettungsgemisch eingebracht wird, da es ansonsten zu Störungen im Polymerisationsablauf und zur Schädigung des Probekörpers kommen kann.

Die Einbettung erfolgt in einer hierfür üblichen Giessform, beispielsweise einem gläsernen Tablettenröhrchen mit einem Innendurchmesser von beispielsweise 25 mm und Verschlussstopfen.

Die Polymerisationszeit hängt vor allem von dem gewählten speziellen Initiatorsystem und der Temperatur ab und beträgt je nach Menge an Hydroxyalkyl(meth)acrylat im allgemeinen 8 bis 56 Stunden, vorzugsweise 6 bis 48 Stunden. Bei der Einbettung von weichen Gewebsproben liegen diese Zeiten entsprechend tiefer.

Die in Form von Kunststoffblöcken erhaltenen eingebetteten Gewebeproben werden dann in der üblichen Weise geschnitten (Hartschnitt-Technik), evtl. vom polymeren Einbettungsmaterial durch Auflösen desselben in geeigneten Lösungsmitteln wie etwa Ketonen (Aceton), Chlorkohlenwasserstoffen (Chloroform), Aromaten (Benzol, Toluol) oder Estern (Methylglykolazetat) befreit und angefärbt sowie anschliessend nach den bekannten Nachweismethoden auf die verschiedenen Gewebsenzyme (z.B. alkalische Phosphatase) geprüft. Hinsichtlich der hierzu benutzten, bekannten Verfahrensmethodik sei beispielsweise verwiesen auf R. Burkhardt, «Farbatlos der klinischen Histopathologie von Knochenmark und Knochen» (1970), Springer Verlag oder R. Burkhardt in «Blut», Bd. XIII (6), Sept. 1966, S. 338 ff und auf T. Barka und P.J. Anderson: «Histochemistry». «Theory, Practice and Bibliography», Hoeber Medical Division, Harper & Row Inc., New York (1963).

Gemäss einer bevorzugten Ausführungsform des erfindungsgemässen Verfahrens wird die entsprechend vorbehandelte Gewebeprobe in das den Radikalinitiator, den Co-Initiator und den Polymerisationsregulator enthaltende Einbettungsgemisch gebracht, wobei dieses zuvor auf Temperaturen von unterhalb —10°C, vorzugsweise unterhalb —15°C, beispielsweise —15°C bis —25°C gekühlt wurde. Die Polymerisation erfolgt dann gleichfalls bei diesen Temperaturen und erstreckt sich in der Regel — je nach der speziellen Art des Initiatorsystems — über mehrere Tage. Bei dieser Verfahrensweise findet in den ersten Stunden zunächst praktisch nur eine Durchtränkung der Gewebsprobe statt, da in dieser Phase eine Polymerisation noch nicht in nennenswertem Umfange abläuft. Da diese Verfahrensvariante speziell bei tiefen Temperaturen durchgeführt wird, ermöglicht sie den Einsatz grösserer Initiatormengen, was sich günstig auf die Zellmorphologie der Probe auswirkt.

Nach einer weiteren bevorzugten Ausführungsform des erfindungsgemässen Verfahrens wird die Gewebeprobe zunächst mit dem Einbettungsgemisch behandelt, das nur eine der beiden Initiatorkomponente höher, vorzugsweise 2- bis 10fach und insbesondere 8- bis 10fach höher liegt als im eigentlichen, beide Initiatorkomponenten enthaltenden Einbettungsgemisch. Speziell bei Verwendung von lichen, beide Initiatorkomponenten enthaltenden Einettungsgemisch. Speziell bei Verwendung von DMA als Beschleuniger hat sich ein Konzentrationsbereich von 1% bis 5%, bezogen auf das Monomerengemisch im Durchtränkungssystem und 0,05% bis 0,2%, bezogen auf das Monomerengemisch im Einbettungssystem als vorteilhaft erwiesen.

Die Durchtränkungstemperatur, Durchtränkungsdauer sowie die Grösse der Gewebeproben stehen in engem Zusammenhang in der Weise, dass tiefere Temperaturen und grössere Gewebestückchen naturgemäss längere Zeiten bedingen und umgekehrt. Grundsätzlich liegt die Durchtränkungstemperatur im gleichen Bereich wie die erfindungsgemässe Einbettungstemperatur, d.h. bei höchstens +15°C. Bevorzugt werden jedoch Temperaturen unterhalb von +15°C, beispielsweise zwischen 0°C und +4°C. Die Durchtränkungszeit liegt in diesem Fall bei etwa 4 bis 6 Stunden, bei einer Knochenmarksbiopsie-Probe in einer Grösse von ca. 4 × 20 mm.

Bei Geweben mit sehr hohen Knochenanteilen bzw. bei speziesbedingten besonders kompakten Knochenbestandteilen (z.B. bei der Ratte) empfiehlt es sich u.U., die Proben nach der Entwässerung mit reinem Alkylmethacrylat, vorzugsweise Methylmethacrylat 4 bis 6 Stunden lang vorzutränken. Bei grösseren Proben können diese Vortränkungszeiten z.T. noch erheblich länger liegen.

Die eigentliche Polymerisation erfolgt dann ebenfalls etwa in diesem Temperaturbereich, vorzugsweise bei 0 bis +8°C. Diese zweite Vorzugsvariante hat gegenüber der erstgenannten Vorzugsvariante den Vorteil der kürzeren Polymerisations- und damit Einbettungszeit, da hier bei höheren Temperaturen gearbeitet werden kann.

Es ist erfindungsgemäss weiterhin auch möglich, die beiden vorstehenden Vorzugsvarianten zu kombinieren und zwar so, dass zunächst die Durchtränkung in Gegenwart beider Initiatorkomponenten bei tiefen Temperaturen gemäss der ersten Variante durchgeführt wird, dann die Temperatur entsprechend angehoben und gemäss der zweiten Variante weiterverfahren wird. Das anfängliche Durchtränken der Gewebsprobe mit einem relativ hohen Initiatoranteil gemäss den vorstehend beschriebenen Vorzugsvarianten gewährleistet eine besonders gute mikroskopische Zellmorphologie und verhindert weitgehendst das Entstehen von mikroskopischen Schrumpfungsartefakten im Gewebe.

Das erfindungsgemässe System zur Einbettung von Gewebeproben besteht entsprechend dem Anspruch 8 im wesentlichen aus den zunächst getrennten Komponenten (a), (b) und (c), die dann bei der Einbettung in entsprechender Weise zusammengegeben werden. Die Komponente (a) kann dabei gegebenenfalls schon einen Teil, beispielsweise 20 bis 60%, aber auch bereits die Gesamtmenge des Polymerisationsbeschleunigers und/oder Polymerisationsregulators oder weniger bevorzugt, des Radikalbildners enthalten. Falls bereits die Gesamtmenge an Polymerisationsbeschleuniger oder Radikalbildner in der Komponente (a) enthalten ist, entfällt naturgemäss die Komponente (b) oder (c).

In einer bevorzugten Ausgestaltungsform ist in der Komponente (a) auch bereits ein Teil, beispielsweise 20 bis 60%, oder auch schon die Gesamtmenge des Weichmachers vorhanden.

Für die Einbettung von knochenhaltigen Gewebeproben kann das Einbettungssystem auch aus den Komponenten (a), (a)' und (b) bestehen, wobei (a) und (a)' bereits den gesamten Polymerisationsbeschleuniger enthalten, die Teilmenge an Polymerisationsbeschleuniger in der Komponente (a) — mit der zuerst die Gewebeprobe behandelt wird — jedoch höher, vorzugsweise 2- bis 10fach höher als in (a)' ist. Auch die Gesamtmenge an Polymerisationsregulator und vorzugsweise auch an Weichmacher kann in beliebiger Aufteilung in den beiden Komponenten (a) und (a)' bereits vorhanden sein.

Wegen der in der Regel guten Löslichkeit der erfindungsgemäss eingesetzten Radikalinitiatoren im Alkyl(meth)acrylat, insbesondere Methylmethacrylat, kann es von Vorteil sein, einen Teil, beispielsweise 20 bis 60%, oder die Gesamtmenge an Alkyl(meth)acrylat aus der Komponente (a) des Einbettungs-Set als eigene Komponente (d) herauszuziehen. Diese Komponente (d) wird dann zuerst mit dem betreffenden Radikalinitiator vermischt und die resultierende Lösung anschliessend den übrigen Komponenten zugegeben.

Die erfindungsgemässe Verfahrensweise gestattet in überraschend einfacher Weise die Herstellung von Gewebeeinbettungen, insbesondere von knochenhaltigen Gewebeproben, unter weitgehendem Erhalt der Enzymaktivität und der Zellmorphologie, was für die enzymhistochemische Diagnostik von wesentlicher Bedeutung ist. Ungleichmässige Polymerisationen über den Querschnitt der einzubettenden Probe und mögliche Polymerisationsstörungen im Zentrum der Gewebeproben sowie Beeinträchtigungen der Zellmorphologie werden insbesondere bei den vorzugsweisen Ausführungsformen des erfindungsgemässen Verfahrens vermieden.

Durch die Verwendung eines Hydroxyalkyl(meth)-acrylathaltigen Einbettungsmediums besitzen die aus den erfindungsgemässen Gewebseinbettungen erhaltenen Schnitte die Eigenschaft, sich selbständig auf einer Wasseroberfläche zu strecken, was das Aufziehen auf Glasobjektträger wesentlich erleichtert. Ausserdem braucht das polymere Einbettungsmaterial in der Regel vor dem Anfärben aus dem Schnitt nicht herausgelöst zu werden.

Die Erfindung wird anhand der nachfolgenden Beispiele erläutert.

*Beispiele*

Die einzubettenden knochenhaltigen Gewebsproben (Knochenmarksbiopsiezylinder) wurden zunächst fixiert und zwar für die alkalische Phosphatasereaktion für 2 bis 4 Stunden in einem Gemisch, bestehend aus zwei Teilen abs. Methanol, einem Teil Formol (37%ig) und 3% Glukosephosphatpuffer pH 7,4. Für die Reaktion auf unspezifische Esterase und saure Phosphatase betrug die Fixationszeit 2 bis 6 Stunden in 4% Paraformaldehyd, gelöst in 0,1 $\underline{M}$ Cacodylatpuffer pH 7,2. Anschliessend wurden die Proben innerhalb von 2 Std. durch 6maligen Wechsel in 2-Hydroxyäthylmethacrylat entwässert, danach für mindestens 4 Stunden mit dem Durchtränkungsgemisch behandelt und mit dem Einbettungsgemisch in Giessformen (Flachbodengläser, Illex Braunglas der Münnerstädter Glaswarenfabrik Art.-Nr. Wda 1/05 mit einem Innedurchmesser von 25 mm und Verschlussstopfen) auspolymerisiert. Die jeweiligen Einzelheiten sind aus der folgenden Tabelle ersichtlich.

Bei Geweben mit sehr hohen Knochenanteilen wurden die Knochen nach der Entwässerung mit reinem Methylmethacrylat ca. 4 Stunden vorgetränkt.

Die erhaltenen eingebetteten Gewebsproben in Form von Kunststoffblöcken wurden dann mit Hilfe eines handelsüblichen Hartschnittmikrotoms (Rotationsmikrotom Nr. 1140 der Fa. R. Jung, Nussloch) zu Gewebsschnitten aufgearbeitet. Die Prüfung der Schnitte auf ihren morphologischen Gewebszustand erfolgte mikroskopisch nach einer Giemsa-Färbung. Der Nachweis der Enzymaktivitäten wurde ebenfalls mikroskopisch an den zuvor teilweise mit Methylglykolazetat vom polymeren Einbettungsmaterial befreiten und auf verschiedene Gewebsenzyme reagierten Schnitten vorgenommen. Positive Enzymaktivitäten wurden hierbei erhalten nach einer Inkubation der Schnitte für 90 Minuten bei 37°C, und zwar für die alkalische Phosphatase (vergl. «Blood» Bd. 10, S. 1023, 1955), saure Phosphatase mit Fast Garnet GBC-Salz (vgl. J. Path. Bact. Bd. 64, S. 627, 1952) und unspezifische Esterase (vgl. J. Histochem. Cytochem. Bd. 7, S. 297, 1959).

Die Ergebnisse gibt gleichfalls die nachfolgende Tabelle wieder.

*Tabelle*

| No. | Durchtränkungs-gemisch/Temp. (°C) | Zeit (h) | Einbettungs-gemisch Temp. (°C) | Temp. max. (°C) | Polymerisa-tionszeit (h) | Bemerkungen |
|---|---|---|---|---|---|---|
| 1 | 3 ml MMA<br>7 ml HÄMA<br>1 ml BUG<br>1% B. 182<br>3% BPO<br>/+2°C | 4 | 3 ml MMA<br>7 ml HÄMA<br>1 ml BUG<br>1% B. 182<br>0,05% BPO<br>0,01% DÄA<br>+2°C | +8°C<br>nach<br>11 Std. | ca. 14 | homogen eingebettete Proben, schneidbar, Enzymaktivität nachweisbar und lokalisierbar |
| 2 | 1,5 ml MMA<br>8,5 ml HÄMA<br>0,5% B. 182<br>3% BPO<br>2 ml BUG<br>/+2°C | 4 | 1,5 ml MMA<br>8,5 ml HÄMA<br>1% B. 182<br>0,3% BPO<br>0,1% DMA<br>/+2°C | +10°C<br>nach<br>8 Std. | ca. 10 | » |
| 3 | 1,0 ml MMA<br>6,0 ml HÄMA<br>3,0 ml BA<br>3% BPO<br><br><br>/+2°C | 4 | 1,0 ml MMA<br>6,0 ml HÄMA<br>3,0 ml BA<br>0,3% BPO<br>0,15% DMA<br>0,5% TPP<br>/+2°C | +9°C<br>nach<br>8 Std. | ca. 10 | » |

(Fortsetzung Tabelle)

| No. | Durchtränkungs-gemisch/Temp. (°C) | Zeit (h) | Einbettungs-gemisch Temp. (°C) | Temp. max. (°C) | Polymerisa-tionszeit (h) | Bemerkungen |
|---|---|---|---|---|---|---|
| 4 | 3 ml MMA<br>6 ml HÄMA<br>1 ml HÄA<br>1 ml PROP<br><br>3% BPO<br>/ +2°C | 4 | 3 ml MMA<br>6 ml HÄMA<br>1 ml HÄA<br>1 ml PROP<br>0,3% BPO<br>0,15% DMA<br>/ +2°C | +20°C<br>nach<br>8 Std. | ca. 8 | homogen eingebet-tete Proben, schneidbar, Enzym-aktivität nachweisbar und lokalisierbar |

| | | |
|---|---|---|
| DÄA | = | N,N-Diäthylanilin |
| BPO | = | Dibenzoylperoxid |
| MMA | = | Methylmethacrylat |
| HÄMA | = | 2-Hydroxyäthylmethacrylat |
| HÄA | = | 2-Hydroxyäthylacrylat |
| BUG | = | Butylglykol |
| DMA | = | N,N-Dimethylanilin |
| B. 182 | = | «Beschleuniger 182» der Fa. Oxydo (Polym.-Regulator) |
| BA | = | Butylacrylat |
| TPP | = | Triphenylphosphin |
| PROP | = | Propanol |

## Patentansprüche

1. Verfahren zur Einbettung von Gewebsproben, wobei das einzubettende Gewebe in Alkyl(meth)-acrylat, ggf. in Abmischung mit einem Weichmacher, bei Temperaturen von höchstens +20°C, in Gegenwart eines Tieftemperatur-Initiatorsystems, das neben dem Radikalbildner Beschleuniger enthält, einpolymerisiert wird, dadurch gekennzeichnet, dass das Alkyl(meth)acrylat in Abmischung mit Hydroxyalkyl(meth)acrylat eingesetzt wird, wobei das Gewichtsverhältnis von Hydroxyalkyl(meth)-acrylat zu Alkyl(meth)acrylat den Wert von 9:1 nicht überschreitet.

2. Verfahren nach Anspruch 1, dadurch gekennzeichnet, dass das Gewichtsverhältnis von Hydroxyalkyl(meth)acrylat zu Alkyl(meth)acrylat 8:2 bis 4:6 beträgt.

3. Verfahren nach Anspruch 1 und 2, dadurch gekennzeichnet, dass als Beschleuniger tertiäre aliphatische und/oder aromatisch-aliphatische Amine und/oder Schwermetallsalze eingesetzt werden.

4. Verfahren nach Anspruch 1 bis 3, dadurch gekennzeichnet, dass bei einer Temperatur von +2°C bis —20°C polymerisiert wird.

5. Verfahren nach Anspruch 1 bis 4, dadurch gekennzeichnet, dass die Gewebsprobe vor dem Einbringen in das Polymerisationsgemisch mit einem Gemisch aus Monomeren, Beschleuniger und/oder Radikalbildner behandelt wird, wobei die Konzentration an Beschleuniger und/oder Radikalbildner 2- bis 10fach höher als in dem Polymerisationsgemisch ist.

6. Verfahren nach Anspruch 1 bis 5, dadurch ge-kennzeichnet, dass als Weichmacher Nonylphenol-polyglykolätheracetat oder Butylglykol eingesetzt werden.

7. Verfahren nach Anspruch 1 bis 6, dadurch gekennzeichnet, dass zusätzlich noch Polymerisationsregulatoren zum Einsatz kommen.

8. System zur Einbettung von Gewebsproben, bestehend im wesentlichen aus den zunächst getrennten Komponenten
(a) Hydroxyalkyl(meth)acrylat und Alkyl(meth)acrylat ggf. zusammen Polymerisationsinhibitoren und ggf. in Abmischung mit dem Polymerisationsbeschleuniger oder dem Radikalbildner, wobei das Gewichtsverhältnis von Hydroxyalkyl(meth)acrylat zu Alkyl(meth)acrylat 8:2 bis 4:6 beträgt,
(b) dem Radikalbildner und
(c) dem Polymerisationsbeschleuniger.

9. Einbettungssystem nach Anspruch 8, dadurch gekennzeichnet, dass die Komponenten (a) und/oder (b) und/oder (c) zusätzlich noch Weichmacher enthalten.

10. Einbettungssystem nach Anspruch 8 und 9, dadurch gekennzeichnet, dass die Komponenten (a) und/oder (c) zusätzlich noch Schwermetallsalze und/oder Polymerisationsregulatoren enthalten.

11. Einbettungssystem nach Anspruch 8 bis 10, dadurch gekennzeichnet, dass es als Beschleuniger tertiäre aliphatische und/oder aromatisch-aliphatische Amine und/oder Schwermetallsalze enthält.

12. Einbettungssystem nach Anspruch 8 bis 11, dadurch gekennzeichnet, dass es als Weichmacher Nonylphenolpolyglykolätherazetat enthält.

13. Einbettungssystem nach Anspruch 8 bis 12, dadurch gekennzeichnet, dass es zusätzlich noch die Komponente (d) enthält, die aus einem Teil oder der Gesamtmenge des Alkyl(meth)acrylats der Komponente (a) besteht.

## Revendications

1. Procédé pour l'enrobage d'échantillons tissulaires, le tissu à enrober étant polymérisé dans un (méth)acrylate d'alkyle, éventuellement en mélange avec un plastifiant, à des températures au maximum égales à +20°C, en présence d'un système initiateur à basse température contenant, outre le générateur radicalaire, un accélérateur, caractérisé en ce que le (méth)acrylate d'alkyle est utilisé en mélange avec un (méth)acrylate d'hydroxyalkyle, le rapport pondéral entre le (méth)acrylate d'hydroxyalkyle et le (méth)acrylate d'alkyle ne dépassant pas la valeur de 9:1.

2. Procédé selon la revendication 1, caractérisé en ce que le rapport pondéral entre le (méth)acrylate d'hydroxyalkyle et le (méth)acrylate d'alkyle est compris entre 8:2 et 4:6.

3. Procédé selon l'une quelconque des revendications 1 ou 2, caractérisé en ce qu'on utilise en tant qu'accélérateur des amines tertiaires, aliphatiques et/ou aromatiques-aliphatiques et/ou des sels de métaux lourds.

4. Procédé selon l'une quelconque des revendications 1 à 3, caractérisé en ce que la polymérisation est effectuée à une température de +2°C à —20°C.

5. Procédé selon l'une quelconque des revendications 1 à 4, caractérisé en ce que l'échantillon histologique est, avant introduction dans le mélange de polymérisation, traité par un mélange constitué de monomères, d'un accélérateur et/ou d'un générateur radicalaire, la concentration de l'accélérateur et/ou du générateur radicalaire étant 2 à 10 fois plus élevée que dans le mélange de polymérisation.

6. Procédé selon l'une quelconque des revendications 1 à 5, caractérisé en ce qu'on utilise en tant que plastifiant de l'étheracétate nonylphénylique du polyéthylèneglycol ou du butylglycol.

7. Procédé selon l'une quelconque des revendications 1 à 6, caractérisé en ce qu'on utilise encore, de plus, des régulateurs de polymérisation.

8. Système pour l'enrobage d'échantillons histologiques, caractérisé en ce qu'il se compose essentiellement des constituants, d'abord distincts: (a) (méth)acrylate d'hydroxyalkyle et (méth)acrylate d'alkyle, éventuellement avec des inhibiteurs de polymérisation et éventuellement en mélange avec l'accélérateur de polymérisation ou le générateur radicalaire, le rapport pondéral entre le (méth)acrylate d'hydroxyalkyle et le (méth)acrylate d'alkyle étant compris entre 8:2 et 4:6; (b) le générateur radicalaire et (c) l'accélérateur de polymérisation.

9. Système d'enrobage selon la revendication 8, caractérisé en ce que les constituants (a) et/ou (b) et/ou (c) contiennent encore en outre un plastifiant.

10. Système d'enrobage selon l'une quelconque des revendications 8 ou 9, caractérisé en ce que les constituants (a) et/ou (c) contiennent encore, en outre, des sels de métaux lourds et/ou des régulateurs de polymérisation.

11. Systèmes d'enrobage selon l'une quelconque des revendications 8 à 10, caractérisé en ce qu'ils contiennent en tant qu'accélérateur des amines tertiaires, aliphatiques et/ou aromatiques-aliphatiques, et/ou des sels de métaux lourds.

12. Système d'enrobage selon l'une quelconque des revendications 8 à 11, caractérisé en ce qu'il contient en tant que plastifiant de l'étheracétate nonylphénylique du polyéthylèneglycol.

13. Système d'enrobage selon l'une quelconque des revendications 8 à 12, caractérisé en ce qu'il contient encore, de plus, le constituant (d), composé d'une partie ou de la totalité du (méth)acrylate d'alkyle du constituant (a).

## Claims

1. Process for embedding tissue samples in which the sample embedded by polymerization (meth)acrylate, optionally mixed with a plasticizer, at temperatures of at most +20°C in the presence of a low-temperature initiator system which contains an accelerator in addition to the agent which forms free radicals, which comprises using the alkyl (meth)acrylate as a mixture with a hydroxyalkyl (meth)acrylate, the weight ratio of hydroxyalkyl (meth)acrylate to alkyl (meth)acrylate not exceeding the value of 9:1.

2. Process as claimed in claim 1, wherein the weight ratio of hydroxyalkyl (meth)acrylate to alkyl (meth)acrylate is 8:2 to 4:6.

3. Process as claimed in claims 1 and 2, wherein tertiary aliphatic and/or aromatic-aliphatic amines and/or heavy metal salts are employed as the accelerators.

4. Process as claimed in claims 1 to 3, wherein the temperature is +2°C to —20°C.

5. Process as claimed in claims 1 to 4, wherein, before being introduced into the polymerization mixture, the tissue sample is treated with a mixture of monomer, accelerator and/or agent which forms free radicals, the concentration of accelerator and/or agent which forms free radicals being 2 to 10 times higher in this mixture than in the polymerization mixture.

6. Process as claimed in claims 1 to 5, wherein nonylphenol polyglycol ether-acetate or butylglycol is employed as the plasticizer.

7. Process as claimed in claims 1 to 6, wherein polymerization regulators are also additionally employed.

8. System for embedding tissue samples, consisting essentially of the following initially separate components:
(a) a hydroxyalkyl (meth)acrylate and an alkyl (meth)acrylate, if appropriate together with polymerization inhibitors and if appropriate mixed with the polymerization accelerator or the agent which forms free radicals, the weight ratio of hydroxyalkyl (meth)acrylate to alkyl (meth)acrylate being 8:2 to 4:6,
(b) the agent which forms free radicals and
(c) the polymerization accelerator.

9. Embedding system as claimed in claim 8, wherein the components (a) and/or (b) and/or (c) originally also contain plasticizer.

10. Embedding system as claimed in claims 8 and 9, wherein the components (a) and/or (c) additionally also contain heavy metal salts and/or polymerization regulators.

11. Embedding system as claimed in claims 8 to 10, which contains tertiary aliphatic and/or aromatic-aliphatic amines and/or heavy metal salts as the accelerator.

12. Embedding system as claimed in claims 8 to 11, which contains nonylphenol polyglycol ether-acetate as the plasticizer.

13. Embedding system as claimed in claims 8 to 12, which additionally also contains component (d), which consists of part or all of the alkyl (meth)acrylate of component (a).